# EUROPEAN PATENT SPECIFICATION

(11) **EP 2 798 863 B1**
(45) Date of publication and mention of the grant of the patent: **01.02.2017**
(21) Application number: 11878801.7
(22) Date of filing: 30.12.2011
(51) Int. Cl.: H04W 4/02, H04W 4/22, H04W 84/18, G01C 21/34, G08G 1/0967, G08G 1/0968, G08G 1/16, H04W 4/04

(54) **WIRELESS NETWORKS FOR SHARING ROAD INFORMATION**
DRAHTLOSE NETZWERKE ZUR GEMEINSAMEN NUTZUNG VON STRASSENINFORMATIONEN
RÉSEAUX SANS FIL POUR PARTAGE D'INFORMATIONS ROUTIÈRES

(43) Date of publication of application: 05.11.2014
(73) Proprietor: Intel Corporation, Santa Clara, CA 95054 (US)
(72) Inventor: TICKOO, Omesh, Portland, Oregon 97229 (US); IYER, Ravishankar, Portland, Oregon 97229 (US)
(74) Representative: Goddar, Heinz J.
(86) International application number: PCT/US2011/068102
(87) International publication number: WO 2013/101183

(56) References cited:
- EP-A1- 1 672 854
- EP-A1- 2 203 004
- KR-B1- 100 835 385
- US-A1- 2005 002 347
- US-A1- 2005 201 316
- US-A1- 2010 194 592
- US-A1- 2010 194 592

## Description

### Background

This relates generally to wireless networks for mobile devices.

A mobile device can use a wireless communication technology to establish a network connection to another mobile device. The wireless network connection enables the mobile devices to communicate with each other.
US2010194592 discloses a method and an apparatus for broadcasting information related to a vehicular environment using an broadcast network of nodes including a source node and a plurality of relay nodes.
US2005002347 discloses a traffic information service apparatus using an ad-hoc network and a method for controlling the same.
US2005201316 discloses a wireless network system which relays a broadcast signal in multi-ple stages and distributes data to terminals there around.
The present invention provides a method, a computer readable medium and a device according respectively to claim 1, claim 6 and claim 11.

### Brief Description Of The Drawings

Some embodiments are described with respect to the following figures:
Figure 1 is a depiction of a portion of an ad hoc wireless network in accordance with one embodiment of the present invention;
Figures 2A-2B are examples of an ad hoc wireless network in accordance with one embodiment of the present invention;
Figures 3A-3B are flow charts in accordance with one embodiment of the present invention;
Figure 4 is a flow chart in accordance with one embodiment of the present invention; and
Figure 5 is a schematic depiction of a node in accordance with one embodiment of the present invention.

### Detailed Description

In accordance with some embodiments, a temporary network may be established between vehicles ("nodes") using wireless connections. Such temporary networks established between nodes may be referred to as "ad hoc wireless networks." In one or more embodiments, an ad hoc wireless network may be used for sending and receiving information about road conditions. Such road information may include an average speed for a particular portion of road, a location and configuration of a road obstruction (e.g., a disabled vehicle), images of an accident scene, a traffic flow plan to route vehicles around a road obstruction, etc. In this manner, vehicles may avoid or reduce delays due to road congestion or obstruction.

Further, in one or more embodiments, the ad hoc wireless network may enable emergency response vehicles to assess an accident before arriving at the accident scene. Emergency response personnel may also use the ad hoc wireless network to send instructions to vehicles at or near the accident scene. In this manner, embodiments may enable faster and more effective responses to accidents.

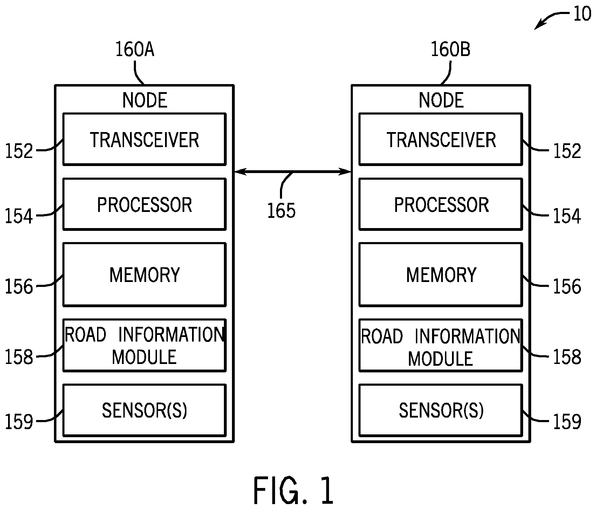

Referring to Figure 1, an ad hoc wireless network 10 may include any number of nodes 160 (e.g., nodes 160A, 160B) connected by a wireless connection 165. The nodes 160 may be any vehicles including wireless communications interfaces. For example, a node 160 may be an automobile including a built-in computer and transceiver, a truck including a portable communication device (e.g., a cellular telephone, a laptop computer or a handheld computer), etc.

In one or more embodiments, each node 160 may include a transceiver 152, a processor 154, a memory device 156, a road information module 158, and sensor(s) 159. Further, each node 160 may have a transmission range, meaning a physical distance over which the included transceiver 152 can effectively send or receive radio transmissions to another device. Generally, a node 160 may establish a wireless connection 165 to another node 160 if the two nodes 160 are within each other's transmission ranges.

Further, in one or more embodiments, if a first node (e.g., node 160A) is out of transmission range of a second node (e.g., node 160B), the first and second nodes may instead connect to each other through one or more intervening nodes (not shown). The intervening nodes may each act as a relay station or repeater, thus enabling the first node to connect to the second node indirectly.

The wireless connections 165 may be based on any radio communications technologies and/or standards. For example, the wireless connection 165 may be a Wi-Fi connection conforming to the IEEE (Institute of Electrical and Electronics Engineers) 802.11 standard, IEEE 802.11-2007, published June 12, 2007.

In one or more embodiments, the road information module 158 may include functionality to discover other nodes 160 with which to establish an ad hoc wireless network. Such functionality may include broadcasting a beacon to invite other nodes 160 to join or establish an ad hoc wireless network. In addition, such functionality may include accepting a beacon received from another node 160.

In one or more embodiments, the road information module 158 may also include functionality to determine whether to establish an ad hoc wireless network (or join an existing network) based on an estimated time duration of a wireless connection (i.e., how long the node 160 is expected to maintain the wireless connection 165 to the other node(s) 160). For example, the time duration may be estimated by determining the amount of time that will elapse before one node 160 physically moves out of the transmission range of the other node 160. This determination may involve predicting the future movements of each node based on the current speed, direction, planned path, and/or destination location of each node 160. The predicted movements may then be used to estimate a point in time (if any) when at least one node 160 moves out of the transmission range of another node 160. In one or more embodiments, the ad hoc wireless network may be established (or is joined) if the estimated time duration exceeds some predefined minimum time of connection (e.g., ten minutes, one hour, etc.).

In one or more embodiments, the road information module 158 may interact with the sensor(s) 159. The sensor(s) 159 may be any device to collect information about the node 160 or its surroundings. The information about the node 160 may include the speed, direction, destination, and planned path of the node 160. For example, the sensor(s) 159 may include a Global Positioning System (GPS) device, an onboard trip computer, a speedometer, a compass, etc. The information about the node 160 may also include a transmission range and signal strength for the node 160. For example, the sensor(s) 159 may also include a radio signal analysis device, a network bandwidth analysis device, etc.

The information about the surroundings of node 160 may include information about the physical configuration of the space around the node 160. Such spatial information may include the number and layout of lanes of the road, the positions and/or speeds of any neighboring vehicles, the position and geometry of a road obstruction (e.g., a fallen tree, a vehicle accident, a construction site), etc. For example, the sensor(s) 159 may also include a camera to capture images of the surroundings (e.g., video camera, still camera, stereoscopic camera), a light-based object-detection system (e.g., a laser, infrared, or ultraviolet emitter and/or detector), a radio-based object-detection system (e.g., active and/or passive radar), a sound-based object-detection system (e.g., active and/or passive sonar), etc.

In one or more embodiments, the information about the surroundings of node 160 may relate to the road surface and/or traction characteristics. For example, the sensor(s) 159 may include a tire traction sensor, a road ice sensor, etc. Further, it is contemplated that the sensor(s) 159 may be any other device or combination of devices configured to capture any other information about the node 160 or its surroundings.

In one or more embodiments, the road information module 158 may include functionality to analyze and/or summarize information derived from the sensor(s) 159. For example, the road information module 158 may use information about vehicle speed and road configuration to determine that a particular lane is obstructed at a specific location. The road information module 158 may also include functionality to present the information and/or an analysis thereof to a user of the node 160. For example, the road information module 158 may interact with a display device or user interface (not shown) to present a summary of the information to a user. Further, in one or more embodiments, the road information module 158 may include functionality to send such information and/or an analysis thereof to other nodes 160 using the ad hoc wireless network.

In one or more embodiments, the road information module 158 of a first node 160A may include functionality to receive inbound road information from a second node 160B, and to present the received inbound road information to a user of the first node 160A. The road information module 158 may also include functionality to determine an alternate route based on road condition information received from another node, and to present the alternate route to a user of the receiving node (e.g., a driver of a vehicle). For example, the road information module 158 of node 160A may receive information from node 160B via the transceiver 152, and may then interact with a display device or user interface (not shown) to present the information to a user of node 160A.

In one or more embodiments, the road information module 158 of a node 160 may include functionality to send information about an accident to an emergency response vehicle using an ad hoc wireless network. For example, in the event of an accident, an emergency response vehicle may be travelling to the scene of the accident. In such a situation, receiving information about the accident from a node may enable personnel of the emergency response vehicle to assess the accident and to prepare before arriving at the accident scene. The road information module 158 of a node 160 may also include functionality to receive instructions from the emergency response vehicle, and to present the received instructions to a user of the node 160. For example, the road information module 158 of node 160 may receive instructions from the emergency response vehicle via the transceiver 152, and may then interact with a display device or user interface (not shown) to present the instructions to a user of node 160A.

In one or more embodiments, the road information module 158 of a node 160 may include functionality to determine a traffic flow plan, and to present the traffic flow plan to a user of the node 160. The traffic flow plan may specify how vehicles are to move around an obstruction in a road. In one or more embodiments, the road information module 158 may automatically determine a traffic flow plan based on predefined algorithms to improve flow through a bottleneck (e.g., merging one vehicle at a time, merging groups of a specified size, merging each lane for a specified period of time, etc.). The traffic flow plan may be determined by a single node 160 (e.g., by the first node 160 to detect the obstruction, by a randomly chosen node 160, etc.), or may be determined cooperatively among multiple nodes 160 (e.g., by automatic voting of each node 160, by user-specified voting in a user interface, etc.).

The road information module 158 may be implemented in hardware, software, and/or firmware. In firmware and software embodiments it may be implemented by computer executed instructions stored in a non-transitory computer readable medium, such as an optical, semiconductor, or magnetic storage device.

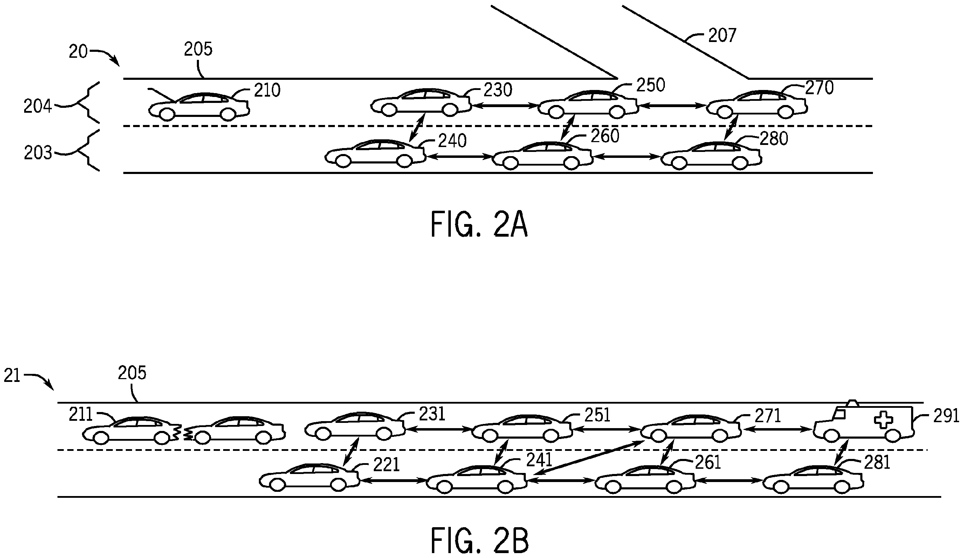

Referring now to Figure 2A, an example 20 of using an ad hoc wireless network for sharing road information is depicted in accordance with one or more embodiments. In this example, nodes 230, 240, 250, 260, 270, and 280 are travelling on a highway 205, and are connected by an ad hoc wireless network (indicated by arrows). Assume that the nodes shown in Figure 2A are equivalent to the nodes 160 shown in Figure 1, and include the same components and functionality described above with reference to nodes 160.

As shown in Figure 2A, the highway 205 may have two lanes, a right lane 203 and a left lane 204, both for travel in the same direction. In this example, an obstruction 210 is present at a particular location or portion of the highway 205. The obstruction 210 may represent anything affecting the flow of traffic, such as a group of slow and/or stopped vehicles, an oil spill, an ice patch, a fallen tree, a construction site, a vehicle suffering a mechanical breakdown, etc. In one or more embodiments, as node 230 approaches the obstruction 210, one or more sensors 159 of node 230 may detect the obstruction 210. For example, the sensor(s) 159 may detect a vehicle or object blocking the right lane 203, a drop in average speed of vehicles at the particular location, a loss in traction, etc.

In response to detecting the obstruction 210, node 230 may send information about the obstruction 210 to the other nodes using the ad hoc wireless network. Such information may include, e.g., location, speed, video or still images, a text description, or any other indication of the obstruction 210. Upon receiving the information from node 230, each receiving node (e.g., node 250) may present the information (or an indication based on the information) to a user of the receiving node (e.g., a driver). The drivers of the receiving nodes may then adjust their driving based on the received information. For example, a driver may change lanes to avoid the obstruction 210. In another example, a driver may slow a driving speed before reaching an ice patch. In yet another example, the driver of node 270 may avoid the obstruction 210 by detouring off the highway 205 onto a side road 207.

In one or more embodiments, one or more nodes shown in Figure 2A may determine a traffic flow plan to move around the obstruction 210. For example, node 230 may generate a traffic flow plan specifying that groups of vehicles from the two lanes are to use a single unobstructed lane in alternating turns. Such a traffic control plan may be based on quantities of vehicles (e.g., ten vehicles from left lane 204, then ten vehicles from right lane 203, etc.), periods of time (e.g., fifty seconds allocated to left lane 204, then forty seconds allocated to right lane 203, etc.), any combination of quantities and time periods, and/or any other parameters. The traffic control plan may be based on one or more predefined algorithms for traffic control. The traffic control plan may be sent to each vehicle affected by the obstruction 210 (e.g., nodes 240, 250, 260, etc.). Optionally, in one or more embodiments, the traffic control plan may be generated cooperatively by the nodes included in the ad hoc wireless network.

Further, in one or more embodiments, the driver of each vehicle may be presented with the traffic control plan (or information derived from the traffic control plan) in order to move around the obstruction. For example, each driver may receive an indication on a display device (e.g., a green light and red light display, a text message, an auditory signal, etc.) to determine whether to stop or go into an available lane around the obstruction 210. In this manner, the flow around the obstruction may be controlled in a manner similar to that provided by a traffic policeman, and may thereby reduce the delay to each vehicle.

Referring now to Figure 2B, an example 21 of using an ad hoc wireless network in emergency response situations is depicted in accordance with one or more embodiments. In this example, nodes 221, 231, 241, 251, 261, 271, and 281 are travelling on highway 205, and are connected by an ad hoc wireless network (indicated by arrows). Assume that the nodes shown in Figure 2B are equivalent to the nodes 160 shown in Figure 1, and include the same components and functionality described above with reference to nodes 160.

As shown in Figure 2B, an accident 211 (e.g., a multi-vehicle collision, a vehicle-pedestrian collision, etc.) has occurred at a particular location on the highway 205. Assume that an emergency service has been called in response to the accident 211, and therefore an emergency response vehicle 291 (e.g., an ambulance, a fire truck, a police car, etc.) is travelling toward the site of the accident 211.

In one or more embodiments, the emergency response vehicle 291 may receive information related to the accident 211 from any nodes in the vicinity of the accident 211. For example, the emergency response vehicle 291 may receive images of the accident 211 from node 231. Such images may have been captured by a sensor 159 (e.g., a camera) of node 231, and may have been sent by node 231 using the ad hoc wireless network. The information received by the emergency response vehicle 291 may also include, e.g., location, speed, video, a text description, or any other indication of the accident 211. Such information may enable personnel of the emergency response vehicle 291 to assess the accident 211 and to prepare before arriving at the site of the accident 211.

In one or more embodiments, personnel in the emergency response vehicle 291 may use the ad hoc wireless network to send instructions to the nodes. For example, such instructions may include a request to keep a particular lane clear for the emergency response vehicle 291, a request for additional information about the accident (e.g., request an image of a particular location or from a particular perspective), a request to administer first aid to an injured person, etc.

Note that the examples shown in Figures 1 and 2A-2B are provided for the sake of illustration, and are not intended to limit embodiments of the invention. For example, embodiments of the invention may include any number and arrangement of nodes. Further, it is contemplated that ad hoc wireless networks may be established using any number of intermediate nodes, and may also connect to external communications networks. For example, any of the nodes may also connect to an access point (not shown) to access another network (e.g., the Internet). It is also contemplated that the nodes may act as network relays for each other, thereby enabling a node to access an external network without being directly connected to an access point.

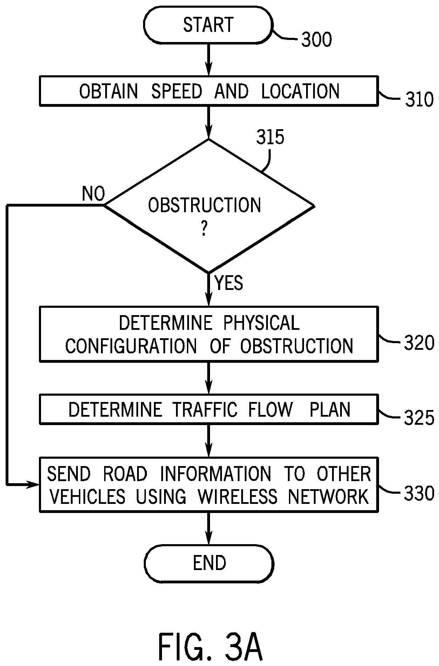

Figure 3A shows a sequence 300 for obtaining road information in accordance with one or more embodiments. The sequence 300 may be implemented in hardware, software, and/or firmware. In firmware and software embodiments it may be implemented by computer executed instructions stored in a non-transitory computer readable medium, such as an optical, semiconductor, or magnetic storage device. In one embodiment, the sequence 300 may be part of the road information module 158 shown in Figure 1. In another embodiment, the sequence 300 may be implemented by any other component of a node 160.

At step 310, speed and location information may be obtained by a node. For example, referring to Figures 1 and 2A, node 230 may obtain the average speed of traffic at a particular location on highway 205. In one or more embodiments, such speed and location information may be provided by sensor(s) 159 (e.g., a GPS device, an onboard trip computer, a speedometer, etc.) included in the node 230.

At step 315, a determination may be made about whether there is an obstruction in a road. For example, referring to Figure 2A, node 230 may use sensor(s) 159 to detect the obstruction 210 in highway 205. If it is determined that there is no obstruction, then at step 330, the road information about speed and location (obtained at step 310) is sent to other vehicles using the ad hoc wireless network. For example, referring to Figure 2A, node 230 may send information about average speed of traffic at a particular location on highway 205 to node 250.

However, if it is determined at step 315 that there is an obstruction, then at step 320, the physical configuration of the obstruction may be determined. For example, referring to Figure 2A, node 230 may use on-board sensors 159 to determine the physical configuration (e.g., size, shape, location, etc.) of the obstruction 210 and the surrounding area.

At step 325, a traffic flow plan may be determined. For example, referring to Figure 2A, node 230 may determine a traffic flow plan specifying that three vehicles in the left lane 204 (e.g., nodes 240, 260, and 280) are to pass around the obstruction 210 first, followed by three vehicles in the right lane 203 (e.g., nodes 230, 250, and 270). Optionally, the traffic flow plan may be determined by a vote of a group of nodes.

Next, at step 330, the road information about speed and location (obtained at step 310) and the traffic flow plan (determined at step 325) may be sent to other vehicles using the ad hoc wireless network. For example, referring to Figure 2A, node 230 may send road information and a traffic flow plan to nodes 240, 250, 260, 270, and 280. After step 330, the sequence 300 ends.

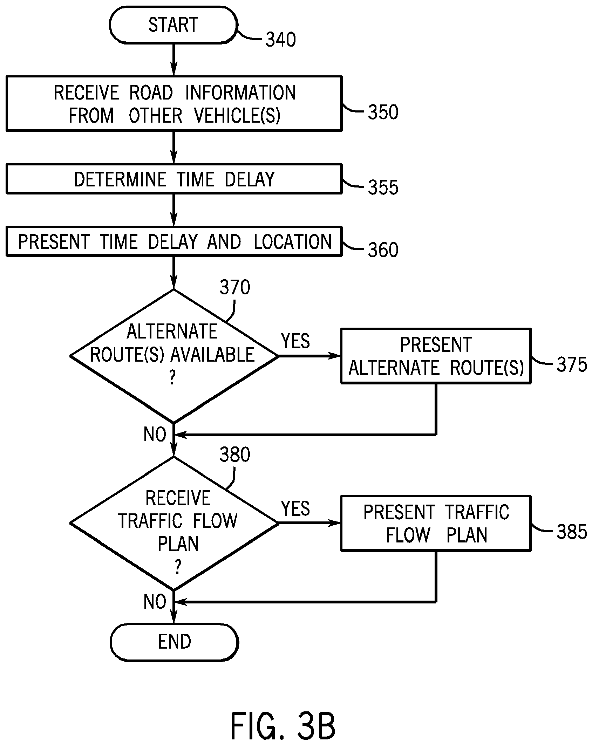

Figure 3B shows a sequence 340 for receiving and using road information in accordance with one or more embodiments. The sequence 340 may be implemented in hardware, software, and/or firmware. In firmware and software embodiments it may be implemented by computer executed instructions stored in a non-transitory computer readable medium, such as an optical, semiconductor, or magnetic storage device. In one embodiment, the sequence 340 may be part of the road information module 158 shown in Figure 1. In another embodiment, the sequence 340 may be implemented by any other component of a node 160.

At step 350, road information may be received from other vehicles in an ad hoc wireless network. For example, referring to Figure 2A, node 250 may receive road information (e.g., average speed at a given location, information about an obstruction, etc.) from node 230.

At step 355, an estimated time delay may be determined using the received road information. At step 360, the estimated time delay may be presented to a driver of the vehicle. For example, referring to Figure 2A, node 270 may use information received from node 230 to determine an estimated time delay due to current road conditions, and may present the estimated time delay to a user of node 270.

At step 370, a determination may be made about whether there any alternate routes available. If not, then the sequence 340 continues at step 380 (described below). However, if it is determined at step 370 that there are alternate routes available, then at step 375, the alternate routes may be presented to a driver. For example, referring to Figures 1 and 2A, node 270 may use sensor(s) 159 (e.g., an navigational computer, a GPS device, etc.) to determine that side road 207 is an alternate route to the highway 205. Thus, the node 270 may interact with a display device to present the alternate route to the driver of node 270. In one or more embodiments, an alternate route may be optionally presented based on the estimated time delay (determined at step 355).

At step 380, a determination may be made about whether a traffic flow plan has been received. If not, then the sequence 340 ends. However, if it is determined at step 380 that a traffic flow plan has been received, then at step 385, the traffic flow plan may be presented to a driver. For example, referring to Figure 2A, node 270 may determine that a traffic flow plan for obstruction 211 has been received from node 230. Thus, the node 270 may interact with a display device to present the traffic flow plan to the driver of node 270. After step 385, the sequence 340 ends.

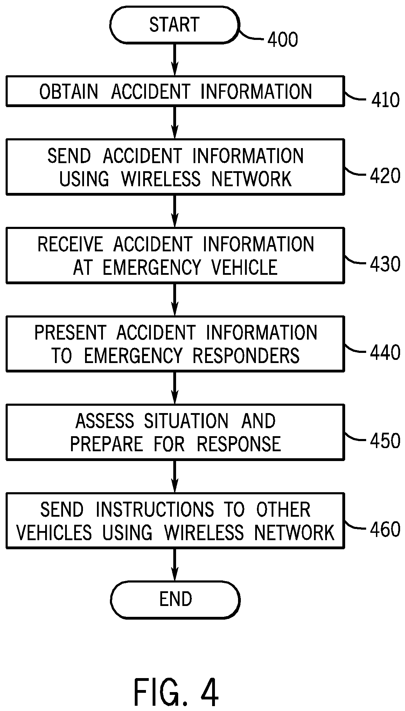

Figure 4 shows a sequence 400 for sharing information in emergency situations in accordance with one or more embodiments. The sequence 400 may be implemented in hardware, software, and/or firmware. In firmware and software embodiments it may be implemented by computer executed instructions stored in a non-transitory computer readable medium, such as an optical, semiconductor, or magnetic storage device. In one embodiment, the sequence 400 may be part of the road information module 158 shown in Figure 1. In another embodiment, the sequence 400 may be implemented by any other component of a node 160.

At step 410, information about an accident may be obtained by a node. For example, referring to Figures 1 and 2B, node 230 may obtain information about accident 211. The information about the accident 211 may include, e.g., location, position, vehicle condition, number of people involved, type and severity of injuries, etc. In one or more embodiments, such accident information may be obtained using sensor(s) 159 (e.g., a video camera, a radar sensor, an infrared sensor, etc.) included in the node 230. Optionally, the accident information may also be entered by a user using an interface of node 230 (e.g., a keyboard, voice interface, graphic interface, mouse, joystick, etc.)

At step 420, the accident information may be sent to other vehicles using the ad hoc wireless network. At step 430, the accident information may be received by an emergency response vehicle. For example, referring to Figure 2B, information about the accident 211 (obtained at step 410) is sent by node 230 using the ad hoc wireless network, and is received by the emergency response vehicle 291.

At step 440, the accident information may be presented to emergency responders. At step 450, the emergency responders may use the accident information to assess the accident, and to prepare to respond to the accident. For example, referring to Figure 2B, personnel of the emergency response vehicle 291 may be presented with information about the accident 211, and may use such information to prepare to respond to the accident 211. Such preparation may include, e.g., gathering required medical supplies, retrieving information about a particular type of vehicle, etc.

At step 460, the emergency responders send instructions to other vehicles using the ad hoc wireless network. For example, referring to Figure 2B, personnel of the emergency response vehicle 291 may send instructions to nodes 221, 231, 241, 251, 261, 271, and 281. Examples of such instructions may include a request to keep a particular lane clear for the emergency response vehicle 291, requests for images or descriptions of the accident, instructions for administering first aid to an injured person at the accident site, etc. After step 460, the sequence 400 ends.

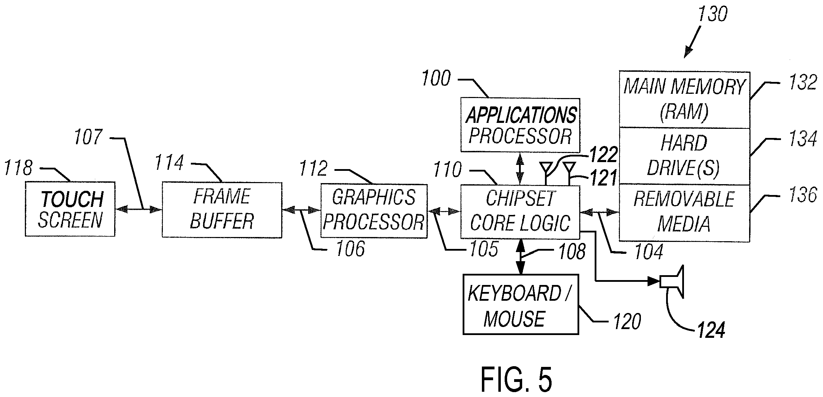

Figure 5 depicts a computer system 130, which may be the nodes 160 shown in Figure 1. The computer system 130 may include a hard drive 134 and a removable medium 136, coupled by a bus 104 to a chipset core logic 110. A keyboard and mouse 120, or other conventional components, may be coupled to the chipset core logic via bus 108. The core logic may couple to the graphics processor 112 via a bus 105, and the applications processor 100 in one embodiment. The graphics processor 112 may also be coupled by a bus 106 to a frame buffer 114. The frame buffer 114 may be coupled by a bus 107 to a display screen 118, such as a liquid crystal display (LCD) touch screen. In one embodiment, a graphics processor 112 may be a multi-threaded, multi-core parallel processor using single instruction multiple data (SIMD) architecture.

The chipset logic 110 may include a non-volatile memory port to couple the main memory 132. Also coupled to the logic 110 may be a radio transceiver and antenna(s) 121, 122. Speakers 124 may also be coupled through logic 110.

## Claims

1. A method comprising:
determining whether to establish an ad hoc wireless network based on an estimated time duration of a wireless connection;
establishing the ad hoc wireless network comprising a plurality of vehicles, if the estimated time duration exceeds a predefined minimum time of connection;
obtaining road information using sensors of a first vehicle of the plurality of vehicles; and
sending the road information to other vehicles of the plurality of vehicles using the ad hoc wireless network.

2. The method of claim 1 wherein obtaining the road information comprises determining an average speed for a particular portion of a road.

3. The method of claim 1 wherein obtaining the road information comprises determining a location of an obstruction in a road.

4. The method of claim 3 wherein obtaining the road information further comprises determining a physical configuration of the obstruction.

5. The method of claim 1 wherein obtaining the road information comprises capturing at least one image of an accident.

6. A non-transitory computer readable medium storing instructions to cause a computer to:
determine whether to establish an ad hoc wireless network based on an estimated time duration of a wireless connection;
establish the ad hoc wireless network comprising a plurality of vehicles, if the estimated time duration exceeds a predefined minimum time of connection;
obtain road information using sensors of a first vehicle of the plurality of vehicles; and
send the road information to other vehicles of the plurality of vehicles using the ad hoc wireless network.

7. The medium of claim 6 further storing instructions to establish the ad hoc wireless network based on speed and direction information for the plurality of vehicles.

8. The medium of claim 6 further storing instructions to send an average speed for a particular portion of a road to a second vehicle of the plurality of vehicles.

9. The medium of claim 6 further storing instructions to send a location of an obstruction in a road to a second vehicle of the plurality of vehicles.

10. The medium of claim 6 further storing instructions to determine a traffic flow plan for an obstruction in a road in cooperation with at least one of the plurality of vehicles.

11. A mobile device comprising:
at least one sensor;
a wireless transceiver; and
a controller coupled to the wireless transceiver, the controller is adapted to:
determine whether to establish an ad hoc wireless network based on an estimated time duration of a wireless connection;
establish the ad hoc wireless network, if the estimated time duration exceeds a predefined minimum time of connection;
obtain road information using the at least one sensor; and
send the road information to a plurality of vehicles using an ad hoc wireless network.

12. The mobile device of claim 11 wherein the controller is also to connect to the ad hoc wireless network.

13. The mobile device of claim 11 wherein the controller is also to determine a traffic flow plan for an obstruction in a road.

14. The mobile device of claim 11 wherein the controller is also to receive inbound road information from a second vehicle of the plurality of vehicles.

15. The mobile device of claim 14 wherein the controller is also to present a user of the mobile device with the inbound road condition information received from the second vehicle.

## Patentansprüche

1. Verfahren, das Folgendes umfasst:
Bestimmen anhand einer geschätzten Zeitdauer einer drahtlosen Verbindung, ob ein drahtloses Ad hoc-Netz einzurichten ist;
Einrichten des drahtlosen Ad hoc-Netzes, das mehrere Fahrzeuge umfasst, wenn die geschätzte Zeitdauer eine vordefinierte minimale Verbindungszeit überschreitet;
Erhalten von Straßeninformationen unter Verwendung von Sensoren eines ersten Fahrzeugs der mehreren Fahrzeuge; und
Senden der Straßeninformationen an andere Fahrzeuge der mehreren Fahrzeuge unter Verwendung des drahtlosen Ad hoc-Netzes.

2. Verfahren nach Anspruch 1, wobei das Erhalten der Straßeninformationen umfasst, eine mittlere Geschwindigkeit für einen bestimmten Teil einer Straße zu bestimmen.

3. Verfahren nach Anspruch 1, wobei das Erhalten der Straßeninformationen umfasst, einen Ort eines Hindernisses in einer Straße zu bestimmen.

4. Verfahren nach Anspruch 3, wobei das Erhalten der Straßeninformationen ferner umfasst, eine physikalische Konfiguration des Hindernisses zu bestimmen.

5. Verfahren nach Anspruch 1, wobei das Erhalten der Straßeninformationen umfasst, mindestens ein Bild eines Unfalls aufzunehmen.

6. Nichtflüchtiges computerlesbares Medium, das Anweisungen speichert, um zu bewirken, dass ein Computer:
anhand einer geschätzten Zeitdauer einer drahtlosen Verbindung bestimmt, ob ein drahtloses Ad hoc-Netz einzurichten ist;
das drahtlose Ad hoc-Netz einrichtet, das mehrere Fahrzeuge umfasst, wenn die geschätzte Zeitdauer eine vordefinierte minimale Verbindungszeit überschreitet;
Straßeninformationen unter Verwendung von Sensoren eines ersten Fahrzeugs der mehreren Fahrzeuge erhält; und
die Straßeninformationen unter Verwendung des drahtlosen Ad hoc-Netzes an andere Fahrzeuge der mehreren Fahrzeuge sendet.

7. Medium nach Anspruch 6, das ferner Anweisungen speichert, um das drahtlose Ad hoc-Netz anhand von Geschwindigkeits- und Richtungsinformationen für die mehreren Fahrzeuge einzurichten.

8. Medium nach Anspruch 6, das ferner Anweisungen speichert, um eine mittlere Geschwindigkeit für einen bestimmten Teil einer Straße an ein zweites Fahrzeug der mehreren Fahrzeuge zu senden.

9. Medium nach Anspruch 6, das ferner Anweisungen speichert, einen Ort eines Hindernisses auf einer Straße an ein zweites Fahrzeug der mehreren Fahrzeuge zu senden.

10. Medium nach Anspruch 6, das ferner Anweisungen speichert, um einen Verkehrsflussplan für ein Hindernis auf einer Straße in Zusammenarbeit mit mindestens einem der mehreren Fahrzeuge zu bestimmen.

11. Mobile Vorrichtung, die Folgendes umfasst:
mindestens einen Sensor;
einen drahtlosen Sendeempfänger; und
eine Steuereinheit, die an den drahtlosen Sendeempfänger gekoppelt ist, wobei die Steuereinheit ausgelegt ist:
anhand einer geschätzten Zeitdauer einer drahtlosen Verbindung zu bestimmen, ob ein drahtloses Ad hoc-Netz einzurichten ist;
das drahtlose Ad hoc-Netz einzurichten, wenn die geschätzte Zeitdauer eine vordefinierte minimale Verbindungszeit überschreitet;
Straßeninformationen unter Verwendung des mindestens einen Sensors zu erhalten; und
die Straßeninformationen unter Verwendung des drahtlosen Ad hoc-Netzes an mehrere Fahrzeuge zu senden.

12. Mobile Vorrichtung nach Anspruch 11, wobei die Steuereinheit außerdem dazu dient, das drahtlose Ad hoc-Netz zu verbinden.

13. Mobile Vorrichtung nach Anspruch 11, wobei die Steuereinheit außerdem dazu dient, einen Verkehrsflussplan für ein Hindernis in einer Straße zu bestimmen.

14. Mobile Vorrichtung nach Anspruch 11, wobei die Steuereinheit außerdem dazu dient, eingehende Straßeninformationen von einem zweiten Fahrzeug der mehreren Fahrzeuge zu empfangen.

15. Mobile Vorrichtung nach Anspruch 14, wobei die Steuereinheit außerdem dazu dient, die eingehenden Straßenzustandsinformationen, die von dem zweiten Fahrzeug empfangen wurden, für einen Anwender der mobilen Vorrichtung darzustellen.

## Revendications

1. Procédé comprenant :
la détermination qu'il convient d'établir ou non un réseau sans fil ad hoc d'après une durée de temps estimée d'une connexion sans fil ;
l'établissement du réseau sans fil ad hoc comprenant une pluralité de véhicules, si la durée de temps estimée dépasse un temps de connexion minimum prédéfini ;
l'obtention d'informations de route au moyen de capteurs d'un premier véhicule de la pluralité de véhicules ; et
l'envoi des informations de route à d'autres véhicules de la pluralité de véhicules au moyen du réseau sans fil ad hoc.

2. Procédé selon la revendication 1 dans lequel l'obtention des informations de route comprend la détermination d'une vitesse moyenne d'une partie particulière d'une route.

3. Procédé selon la revendication 1 dans lequel l'obtention des informations de route comprend la détermination d'un emplacement d'une obstruction sur une route.

4. Procédé selon la revendication 3 dans lequel l'obtention des informations de route comprend en outre la détermination d'une configuration physique de l'obstruction.

5. Procédé selon la revendication 1 dans lequel l'obtention des informations de route comprend la capture d'au moins une image d'un accident.

6. Support non transitoire lisible par ordinateur mémorisant des instructions pour amener un ordinateur à :
déterminer qu'il convient d'établir ou non un réseau sans fil ad hoc d'après une durée de temps estimée d'une connexion sans fil ;
établir le réseau sans fil aucun comprenant une pluralité de véhicules, si la durée de temps estimée dépasse un temps de connexion minimum prédéfini ;
obtenir des informations de route au moyen de capteurs d'un premier véhicule de la pluralité de véhicules ; et
envoyer les informations de route à d'autres véhicules de la pluralité de véhicules au moyen du réseau sans fil ad hoc.

7. Support selon la revendication 6 mémorisant en outre des instructions pour établir le réseau sans fil ad hoc d'après des informations de vitesse et de sens de la pluralité de véhicules.

8. Support selon la revendication 6 mémorisant en outre des instructions pour envoyer une vitesse moyenne pour une partie particulière d'une route à un second véhicule de la pluralité de véhicules.

9. Support selon la revendication 6 mémorisant en outre des instructions pour envoyer un emplacement d'une obstruction sur une route à un second véhicule de la pluralité de véhicules.

10. Support selon la revendication 6 mémorisant en outre des instructions pour déterminer un plan de flux de circulation pour une obstruction sur la route en coopération avec au moins l'un de la pluralité de véhicules.

11. Dispositif mobile comprenant :
au moins un capteur ;
un émetteur-récepteur sans fil ; et
un contrôleur couplé à l'émetteur-récepteur sans fil, le contrôleur étant adapté pour :
déterminer qu'il convient d'établir ou non un réseau sans fil ad hoc d'après une durée de temps estimée d'une connexion sans fil ;
établir le réseau sans fil ad hoc, si la durée de temps estimée dépasse un temps de connexion minimum prédéfini ;
obtenir des informations de route au moyen de l'au moins un capteur ; et
envoyer les informations de route à une pluralité de véhicules au moyen du réseau sans fil ad hoc.

12. Dispositif mobile selon la revendication 11 dans lequel le contrôleur sert également à effectuer une connexion au réseau sans fil ad hoc.

13. Dispositif mobile selon la revendication 11 dans lequel le contrôleur sert également à déterminer un plan de flux de circulation pour une obstruction sur une route.

14. Dispositif mobile selon la revendication 11 dans lequel le contrôleur sert également à recevoir des informations de route entrantes depuis un second véhicule de la pluralité de véhicules.

15. Dispositif mobile selon la revendication 14 dans lequel le contrôleur sert également à présenter à un utilisateur du dispositif mobile des informations de condition de route entrantes reçues depuis le second véhicule.
